# EUROPÄISCHE PATENTSCHRIFT

(11) **EP 2 316 756 B1**
(45) Veröffentlichungstag und Bekanntmachung des Hinweises auf die Patenterteilung: **17.09.2014**
(21) Anmeldenummer: 10007382.4
(22) Anmeldetag: 16.07.2010
(51) Int. Cl.: B65G 7/04, B60B 33/00

(54) **Fuss für ein automatisches Lagersystem sowie Verfahren zum Verschieben eines automatischen Lagersystems**
Foot for an automatic storage system and method for sliding an automatic storage system
Pied pour un système de stockage automatique ainsi que procédé de déplacement d'un système de stockage automatique

(30) Priorität: 29.10.2009 DE 102009051191
(43) Veröffentlichungstag der Anmeldung: 04.05.2011
(73) Patentinhaber: Kardex Production Deutschland GmbH, 86476 Neuburg/Kammel (DE)
(72) Erfinder: Preschke, Harald, 89269 Vöhringen (DE); Kollmann, Wolfgang, 87772 Pfaffenhausen (DE)
(74) Vertreter: Grünecker, Kinkeldey, Stockmair & Schwanhäusser

(56) Entgegenhaltungen:
- BE-A- 554 731
- DE-U1- 20 023 642
- DE-U1-202004 014 452
- JP-A- 9 181 459
- JP-U- 60 022 407
- JP-U- 63 107 311
- US-A- 4 422 212
- US-A- 4 698 875
- US-A- 5 701 843
- US-A1- 2002 174 512
- US-A1- 2003 121 740
- US-A1- 2006 103 092
- US-B1- 7 478 819

## Beschreibung

Die Erfindung betrifft einen Fuß für ein automatisches Lagerliftsystem wie einen Paternoster oder einen Lagerlift, wobei der Fuß ein Rollenelement mit einer Adapterplatte, mit der eine Transportrolle unverlierbar verbunden ist, aufweist, wobei die Adapterplatte als ein Schwenkhebel zum Abheben eines Fußes für das Lagersystem ausgestaltet ist und der Fuß von einer Betriebsstellung, in der er auf einem Boden aufsteht, in eine Transportstellung, in der er vom Boden abgehoben und die Transportrolle auf dem Boden aufgelegt ist, überführbar ist, wobei der Fuß (10) ein Widerlager (W) für die Adapterplatte (2) aufweist, die Adapterplatte (2) des mit der Transportrolle (3) auf dem Boden (11) aufliegenden Rollenelements (1) zusammen mit dem Verstellorgan (O) und dem Andrückelement (E) eine Hebelvorrichtung zum Abheben des Fußes (10) für das Lagersystem ausbildet, und das Verstellorgan (O) durch die Befestigungsöffnung (8) ragend am Widerlager (W) fixiert und die Adapterplatte (2) zumindest im Bereich der Befestigungsöffnung (8) zwischen dem Widerlager und dem Andrückelement (E) angeordnet ist. Des Weiteren betrifft die Erfindung ein Verfahren zum Verschieben eines automatischen Lagersystems wie einen Paternoster oder einen Lagerlift, bei dem wenigstens ein Fuß des Lagersystems durch ein Schwenken einer Adapterplatte eines Rollenelements von einer Betriebsstellung, in der er auf dem Boden aufsteht, in eine Transportstellung, in der er vom Boden abgehoben und eine Transportrolle auf dem Boden aufgelegt ist, überführt wird.

Transportelemente mit Rollen sind allgemein bekannt, beispielsweise aus BE 554 731 A, DE 20 2004 014 452 U1, US 6,701,843 A, US 7,478,819 B1, US 4,422,212 A, US 2003/0121740 A1, US 4,698,875 A, US 2006/103092 A1, DE 200 23 642 U1, JP 60 022 407 U, JP 63 107 311 U, US 2002/0174512 A1, und werden vielfach zum Umsetzen von Lagersystemen verwendet. Hierzu werden die Rollenelemente am Lagersystem angebracht, wobei die Rollenelemente mit dem Lagersystem zum Beispiel verschweißt, also unlösbar, oder auch wiederholt lösbar verschraubt werden können. Neben Befestigungsorganen, über die das Rollenelement am Lagersystem befestigt wird, umfassen bekannte Rollenelemente ferner eine Verstelleinrichtung, durch die das Lagersystem relativ zum Rollenelement bewegt und vom Boden abgehoben werden kann.

JP 9 181 459 A beschreibt ein gattungsgemässen Fuß.

Die DE 102 601 34 B4 zeigt ein solches Rollenelement, das über als Gewindebolzen ausgebildete Befestigungsorgane mit einem Querträger des Lagersystems verschraubt ist. Die Kraft zum Anheben des Lagerliftes wird also in den Querträger eingeleitet. Die Verstelleinrichtung ist als ein vertikaler Gewindebolzen ausgestaltet, der durch den Querträger hindurch geschraubt ist und gegen eine horizontale Platte des Rollenelements drückt.

Ist der vertikale Gewindebolzen um einen vorbestimmten Betrag durch den Querträger geschraubt, so ist das Lagersystem vom Boden abgehoben. Die Gewichtskraft des Lagersystems wird dabei vom Querträger über die Gewindebolzen und durch ein Versteifungselement in Form eines Winkelträgers an die horizontale Platte und eine an dieser befestigten Transportrolle geleitet.

In der oben genannten US 2006/0103092 A1 sind Transportelemente einer mobilen Basis gezeigt, deren Rollen über einen Fußbetätiger und mehrere Hebelzungen ausgebildet sind.

Der Aufbau dieser Transport- und Rollenelemente, die ausschließlich zum Bewegen des Lagersystems Verwendung finden und zur Funktion des Lagersystems ansonsten nichts beitragen, ist jedoch unnötig kompliziert. Zumindest im Querträger der DE 102 60 134 B4 sind Öffnungen für die Gewindebolzen vorzusehen. Die Mechanik der US 2006/0103092 A1 besteht aus verhältnismäßig vielen Teilen. Hierdurch steigen die Anschaffungskosten für das Rollenelement und dessen Handhabung ist erschwert.

Es ist daher die Aufgabe der Erfindung, eine Vorrichtung und ein Verfahren bereitzustellen, mit denen automatische Lagersysteme einfach und preiswert umgesetzt werden können.

Für den eingangs genannten Fuß für ein automatisches Lagersystem wird die Aufgabe dadurch gelost, dass der Fuß die Merkmale des Anspruchs 1 enthält, wobei die Adapterplatte in der Betriebsstellung schräg zum Widerlager verläuft und in der Transportstellung im Vergleich zur Betriebsstellung in Richtung auf das Widerlager geschwenkt ist. Für das eingangs genannte Verfahren wird die Aufgabe gelöst, indem eine Schwenkhebelkraft zum Anheben des Fußes in diesen eingeleitet wird.

Durch den einfachen Aufbau des Rollenelements ist dieses preiswert herzustellen sowie unkompliziert zu handhaben und auch wiederholt lösbar zu montieren. Es kann ohne Weiteres mit verschiedenen automatischen Lagersystemen, die auch Vertikalliftmodule, horizontale oder vertikale Karusselle umfassen können, verwendet werden, wobei diese unterschiedlichen Lagersysteme nicht aufwändig angepasst zu werden brauchen.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen, wobei die konstruktiven Maßnahmen und deren Wirkungen lediglich beispielhaft nur für ein Rollenelement bzw. einen Fuß beschrieben sind. Selbstverständlich kann das automatische Lagersystem mit Hilfe von mehreren erfindungsgemäßen Rollenelementen oder Füßen bewegt werden.

Die Adapterplatte kann an ihrem der Transportrolle gegenüberliegenden Befestigungsende eine senkrecht zur Adapterplatte verlaufende, durchgängige Befestigungsöffnung, zur Anbringung der Adapterplatte am Fuß aufweisen.

In einer besonders vorteilhaften Ausgestaltung kann das Rollenelement aus der Adapterplatte und der mit dieser unverlierbar verbundenen Transportrolle bestehen. Dieser überaus simple Aufbau der Transportrolle erweist sich als überraschend einfach und praktikabel in der Anwendung, selbst wenn er mit großen oder schweren Lagersystemen eingesetzt wird.

Die Adapterplatte kann aus einem Metall, beispielsweise Stahl bestehen und massiv gefertigt sein. Auch ein Rollenelement mit einer massiven Adapterplatte ist leichter als die Rollenelemente des Standes der Technik, da das erfindungsgemäße Rollenelement deutlich weniger Teile umfasst. Alternativ kann die Adapterplatte aus einer Tragestruktur mit beispielsweise fachwerkartig ausgebildeten Verstärkungsstreben oder aus Kunst- bzw. Verbundstoffen gefertigt sein, wodurch sich ihr Gewicht weiter verringert und ihre Handhabbarkeit verbessert. Insbesondere kann die Adapterplatte als ein der Gewichtskraft des Lagersystems widerstehender Horizontalträger ausgeformt sein.

Die Adapterplatte kann um eine parallel zum im Wesentlichen horizontal ausgerichteten Widerlager verlaufende Schwenkachse schwenkbar am Widerlager anliegen. Insbesondere kann die Adapterplatte in einem Auflagebereich, in dem sie am Widerlager anliegt, mit diesem ein Auflager einer das Rollenelement umfassenden Hebevorrichtung ausbilden, mit der eine Hebelkraft hervorrufbar und in dem Fuß einleitbar ist. Zusätzliche Teile zum Anbringen der Adapterplatte am Fuß und zum Einleiten von Hebekräften in den Fuß werden nicht benötigt; der Fuß braucht nicht weiter angepasst werden.

Es kann ein Verstellorgan vorgesehen sein, das durch die Befestigungsöffnung aufnehmbar und am Widerlager durch die Befestigungsöffnung ragend fixiert sein kann. Das relativ zum Widerlager und somit auch relativ zum Lagerliftsystem unbewegliche Verstellorgan dient als Anschlagelement, an dem die Adapterplatte mit ihrer Befestigungsöffnung in einer montierten Stellung des Rollenelements anliegen kann, wodurch die Lage des Rollenelements zum Fuß vorbestimmt ist.

Die Adapterplatte kann in einer am Verstellorgan anliegenden Vormontagestellung des Rollenelements zwischen dem Widerlager und einem Andrückelement angeordnet sein, wobei das Andrückelement verschieblich am Verstellorgan montiert und in einem vom Befestigungsende beabstandeten Druckbereich der Adapterplatte anliegen kann.

Wird das Andrückelement in Richtung auf das Widerlager verschoben, so übt es eine Kraft auf den Druckbereich aus, die durch die an dem Auflager anliegende Adapterplatte in eine Schwenkhebelkraft umgewandelt wird. Der zwischen dem Druckbereich und dem Auflager gelegene Abschnitt der Adapterplatte bildet somit einen Kraftarm, der zwischen der Transportrolle und dem Auflager angeordnete Abschnitt der Adapterplatte einen Lastarm eines Schwenkhebels aus. Der Last- und der Kraftarm der als Schwenkhebel ausgestalteten Adapterplatte überlagern sich, da der mit dem Auflager und der Schwenkachse zusammenfallende Drehpunkt des Schwenkhebels an einem von der Transportrolle weg weisenden Rand des Befestigungsendes angeordnet ist.

Die Schwenklage der Adapterplatte ist durch ein Verschieben des Andrückelements auf dem Verstellorgan änderbar. Wird das Andrückelement in Richtung auf das Widerlager verschoben, so schwenkt die Adapterplatte um die Schwenkachse in Richtung auf das Widerlager, da sie vom Andrückelement in diese Richtung gedrückt wird. Liegen sowohl der Fuß als auch die Transportrolle auf dem Boden auf und wird das Andrückelement eine Kraft auf die Adapterplatte auswirkend in Richtung auf das Widerlager verschoben, so bewirkt die schwenkhebelartige Ausbildung der Adapterplatte, die zusammen mit dem Verstellorgan und dem Andrückelement die Hebelvorrichtung ausbildet, dass der Fuß vom Boden abgehoben wird. Die bisher durch den Fuß in den Boden geleitete Gewichtskraft des Lagersystems fließt nun durch die Adapterplatte und die Transportrolle in den Boden.

In der Transportstellung kann die Adapterplatte parallel zum Widerlager angeordnet und beispielsweise mit diesem durch das Andrückelement verpresst sein. Dabei kann die Adapterplatte auf dem Widerlager aufliegen oder an eine in Richtung auf den Boden weisende Unterseite des Widerlagers gedrückt sein. Alternativ kann die Andruckplatte auch mit einem Gegendruckelement, das beispielsweise unverschieblich auf dem Verstellorgan angeordnet sein kann, verpresst sein.

Ein besonders einfach aufgebauter Fuß ergibt sich, wenn das Verstellorgan mit dem Widerlager eine Höhenverstelleinrichtung für das Lagersystem ausbildet. Hierdurch werden wiederum Bauteile eingespart.

Um das Rollenelement möglichst einfach montieren zu können, kann dessen Befestigungsabschnitt auf das Verstellorgan aufschiebbar sein. Hierzu kann die Befestigungsöffnung schlitzförmig und mit einem zum Befestigungsende im offenen Ende ausgestaltet sein. Somit kann die Adapterplatte in einer horizontalen Richtung auf das Verstellorgan aufgeschoben werden, selbst wenn ein oberes Ende des Verstellorgans nur unzureichend zugänglich sein sollte. Falls Gefahr besteht, dass die Adapterplatte vom Verstellorgan abrutscht, kann die Befestigungsöffnung auf das Verstellorgan aufsteckbar, beispielsweise als ein rundum geschlossenes Langloch, ausgeformt sein. Sowohl der Schlitz als auch das Langloch können sich in einer Vormontagestellung, in der das Rollenelement am Fuß anliegt, parallel zum Verstellorgan bzw. vertikal ausgerichtet durchgängig durch die Adapterplatte verlaufen. Dabei kann sich der Schlitz bzw. das Langloch mit seiner langen Achse vom Befestigungsende in Richtung auf die Transportrolle erstrecken. Das Rollenelement kann sowohl mit einem Schlitz als auch mit einem Langloch wiederholt lösbar mit dem Fuß verbindbar sein.

Um das Lagersystem in unterschiedlichen Richtungen bewegen zu können, kann die Transportrolle um eine Drehachse drehbar und die Transportrolle bzw. deren Drehachse um eine senkrecht zur Drehachse verlaufende Lenkachse schwenkbar mit der Adapterplatte verbunden sein. Somit kann die Drehachse einfach senkrecht zur Bewegungsrichtung des Lagersystems ausgerichtet werden.

Sind die Drehachse und die Lenkachse voneinander beabstandet, so kann die Ausrichtung der nun selbstlenkend ausgebildeten Transportrolle automatisch an die Bewegungsrichtung des Lagersystems anpassen. Allerdings ruft ein Schwenken einer solchen Transportrolle ein Verschieben des Lagersystems hervor. Folglich kann es insbesondere bei großen oder schweren Lagersystemen außerordentlich schwierig sein, die Transportrollen auszurichten. Damit die Drehachse leicht zur Bewegungsrichtung ausgerichtet werden kann, ohne dass ein Schwenken der Transportrolle ein Verschieben des Lagersystems hervorruft, kann die Drehachse die Lenkachse schneiden. Der Schnittpunkt der beiden Achsen kann insbesondere im Inneren der Transportrolle liegen.

Bauelemente, die oftmals bereits Bestandteile eines bekannten Fußes sind, können weiterverwendet oder gegen kompatible Teile ausgetauscht werden, wodurch die Komplexität des erfindungsgemäßen Fußes gering gehalten wird. So kann das Widerlager als eine sich im Wesentlichen horizontal erstreckende Trägerplatte bzw. ein im Wesentlichen horizontal verlaufender Ausleger des Fußes, das Verstellorgan als eine durch die Trägerplatte geschraubte Gewindestange, die Teil eines Stützelements, das die Aufstellfläche des Fußes umfasst, sein kann und das Andrückelement als eine auf das Stützelement aufgeschraubte Kontermutter ausgestaltet sein.

Zumindest die Bauelemente Verstellorgan und Andrückelement können zusammen mit dem Rollenelement als ein Nachrüstsatz für bestehende Lagersysteme zusammengefasst sein. Dabei kann das Verstellorgan am Lagersystem fixierbar und in der Befestigungsöffnung aufnehmbar sein. Das Andrückelement kann entlang des Verstellorgans beweglich und gegen die Adapterplatte in Anschlag bringbar am Verstellorgan montierbar sein. Beispielsweise kann das Verstellorgan mit dem Lagersystem und insbesondere dem Widerlager verschraubbar und das Andrückelement auf das Verstellorgan aufschraubbar ausgestaltet sein.

Im Folgenden ist die Erfindung beispielhaft anhand von Ausführungsbeispielen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

Es zeigen:
- Fig. 1: eine schematische Darstellung eines Ausführungsbeispiels eines erfindungsgemä- β en Rollenelements;
- Fig. 2: eine schematische Schnittdarstellung eines Ausführungsbeispiels eines erfindungs- gemäßen Fußes für ein automatisches Lagersystem mit einem Rollenelement in ei- ner Betriebsstellung;
- Fig. 3: das Ausführungsbeispiel der Fig. 2 in einer Seitenansicht, wobei der Fuß in einer Transportstellung gezeigt ist.

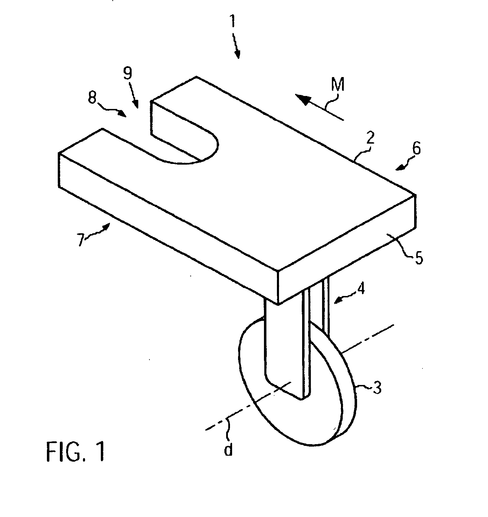

Zunächst sind Aufbau und Funktion eines erfindungsgemäßen Rollenelements mit Bezug auf das Ausführungsbeispiel der Figur 1 beschrieben.

Figur 1 zeigt ein Rollenelement 1 mit einer Adapterplatte 2 und einer Transportrolle 3. Ein Rollenhalter 4 verbindet die Transportrolle 3 unverliebar mit einem zu einem Randbereich 5 der Adapterlatte 2 benachbart angeordneten Rollenabschnitt 6 der Adapterplatte 2. Die Transportrolle 3 ist um eine parallel zur Adapterplatte 2 verlaufende Drehachse d drehbar mit dem Rollenhalter 4 verbunden.

Ein dem Randbereich 5 bzw. dem Rollenabschnitt 6 gegenüberliegendes Befestigungsende 7 der Adapterplatte 2 ist mit einer Befestigungsöffnung 8 zur Montage des Rollenelements 1 an einem Fuß für ein automatisches Lagersystem versehen. Die Befestigungsöffnung 8 erstreckt sich im Wesentlichen parallel zum Rollenhalter 4 und entlang einer Montagerichtung M des Rollenelements 1 durch die Adapterplatte 2 hindurch und ist mit einem vom Rollenabschnitt 6 weg weisenden offenen Ende 9 gezeigt.

In Montagerichtung M ist das Rollenelement 1 auf ein vertikales Verbindungselement des Fußes horizontal aufschiebbar. Um die Beweglichkeit des Rollenelements 1 insbesondere entgegen der horizontalen Montagerichtung M zu begrenzen und somit ein Abrutschen des Rollenelements 1 vom Fuß zu verhindern, kann die Befestigungsöffnung 8 anstelle der Schlitzform die Form eines Langlochs aufweisen. Die so ausgestaltete Adapterplatte 2 kann in einer vertikalen Richtung auch wiederholt lösbar auf den Fuß aufgesetzt werden. Hierbei erleichtert das Langloch, dessen lange Achse vorzugsweise vom Befestigungsende 7 zur Transportrolle 3 weisen kann, das Aufsetzen, da es ein Verklemmen der Befestigungsöffnung 8 mit dem Fuß verhindert und ein nötiges Mindestmaß an Beweglichkeit des Rollenelements 1 gewährleistet, ohne dass die Stabilität der Verbindung zwischen Adapterplatte 2 und dem Fuß beeinträchtigt wird. Ist die Befestigungsöffnung 8 als ein Langloch ausgeformt, so ist das Rollenelement 1 selbsthaltend mit dem Fuß verbindbar. Allerdings erleichtert eine schlitzförmige Befestigungsöffnung 8 die Montage und Demontage des Rollenelements 1, da dieses so einfach seitlich auf den Fuß aufgeschoben werden kann.

Die Adapterplatte 2 ist massiv und aus einem Metall wie etwa Stahl oder Aluminium gefertigt gezeigt. Um das Gewicht des Rollenelements 1 zu senken, kann die Adapterplatte alternativ auch Kunst- oder Verbundsstoffbestandteile umfassen und wenigstens abschnittsweise nicht massiv, sondern mit einer Tragstruktur, beispielsweise mit fachwerkartigen Streben, ausgeformt sein. Auch kann sich die entlang einer Ebene erstreckende Adapterplatte 2 zumindest abschnittsweise gewölbt ausgebildet sein, um zum Beispiel die Gewichtskraft des Lagersystems anders verteilen zu können.

Die Transportrolle 3 und/oder der Rollenhalter 4 sind um eine senkrecht zur Adapterplatte 2 verlaufende und die Drehachse d schneidende Lenkachse r schwenkbar an der Adapterplatte 2 befestigt, so dass die Transportrolle 3 parallel zu einer Bewegungsrichtung, in der das Lagersystem verschoben werden soll, ausrichtbar ist.

Das Rollenelement 1 kann als Bestandteil eines Nachrüstsatzes für ein automatisches Lagersystem oder ein zum Lagersystem gehörendes Funktionsteil ausgestaltet sein. Insbesondere wenn die Befestigungsöffnung 8 schlitzförmig ausgestaltet ist, kann das Rollenelement 1 als ein Nachrüstteil einfach auf einen nahezu beliebig ausgestalteten Fuß aufgeschoben werden, wobei der Fuß lediglich ein vertikales Verbindungselement aufweisen oder ein Abschnitt des Fußes als ein solches Verbindungselement nutzbar sein muss. Alternativ kann das vertikale Verbindungselement nachrüstbar sein.

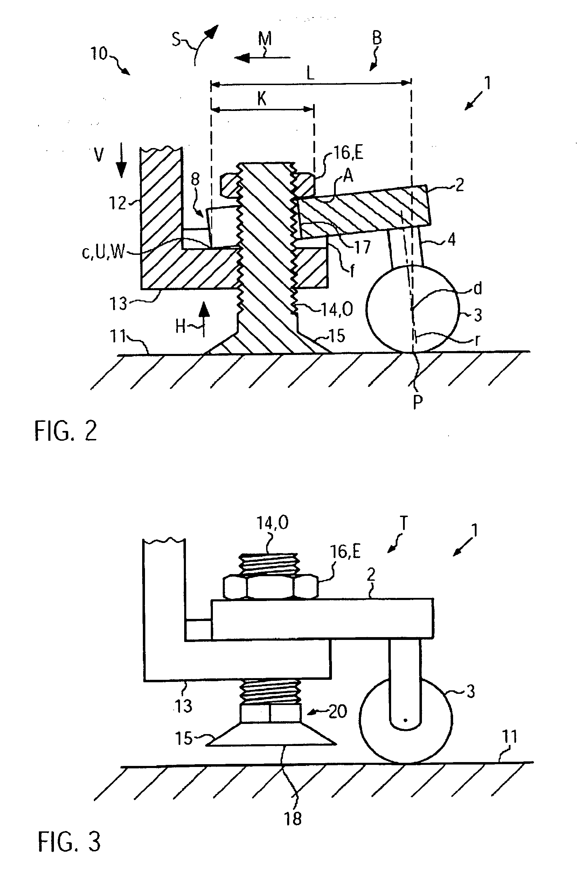

Figur 2 zeigt ein Ausführungsbeispiel eines erfindungsgemäßen Fußes für ein automatisches Lagersystem mit einem Rollenelement 1 der Figur 1, wobei der Fuß entlang einer etwa mittig durch das Rollenelement 1 in Montagerichtung M verlaufenden Ebene geschnitten gezeigt ist. Für Elemente, die in Funktion und/oder Aufbau den Elementen des Ausführungsbeispiels der Figur 1 entsprechen, werden dieselben Bezugszeichen verwendet. Der Kürze halber wird lediglich auf die Unterschiede zum Ausführungsbeispiel der Figur 1 eingegangen.

Figur 2 zeigt einen Fuß 10 für ein Lagersystem mit dem Rollenelement 1 in einer Betriebsstellung B, in der er auf einem Boden 11, beispielsweise einem Boden einer Lagerhalle, aufsteht. Der Fuß 10 umfasst einen Vertikalträger 12, der am nicht dargestellten Lagersystem befestigt oder befestigbar ist, und eine im Wesentlichen horizontal ausgerichtete und vorstehende Trägerplatte 13, die am Vertikalträger 12 senkrecht zu diesem ausgerichtet befestigt ist.

Durch die auslegerförmig ausgeformte Trägerplatte 13 ist ein Verstellorgan O in Form eines Stützelements 14 hindurchgeschraubt, über dessen Abstellende 15 der Fuß 10 auf dem Boden 11 steht. Die Gewichtskraft des Lagerliftes wird in der gezeigten Betriebsstellung B über den Vertikalträger 12 und die Trägerplatte 13 in das Stützelement 14 und dessen Aufstellende 15 sowie schließlich in den Boden 11 eingeleitet.

Das Stützelement 14 ragt vom Boden 11 weg weisend durch die Trägerplatte 13. Auf einem freien und vom Boden 11 weg weisenden Ende des Stützelements 14, das wenigstens abschnittsweise als eine Gewindestange ausgeformt ist, ist ein Andrückelement E in Form einer Schraubenmutter 16 in einer auf die Trägerplatte 13 gerichteten Verschiebe- bzw. Anpressrichtung V aufgeschraubt.

Das Rollenelement 1 ist in der dargestellten Vormontagestellung so auf den Fuß 10 aufgeschoben, dass eine die Befestigungsöffnung 8 begrenzende Anschlagfläche 17 am Stützelement 14 zwischen der Trägerplatte 13 und der Schraubenmutter 16 anliegt. Zumindest der an der Adapterplatte 2 anliegende Abschnitt des Verstellorgans O erfüllt die Funktion des vertikalen Verbindungselements.

Das Rollenelement 1 liegt dabei einerseits in einem Auflagepunkt P mit der Transportrolle 3 auf dem Boden 11 und andererseits in einem Unterstützungspunkt U mit dem Befestigungsende 7 der Adapterplatte 2 auf der Trägerplatte 13 auf. Die Trägerplatte 13 bildet also ein Widerlager W für die Adapterplatte 2 aus.

Da der Rollenhalter 4 zusammen mit der Transportrolle 3 länger ausgestaltet ist als der zwischen dem Boden 11 und der Trägerplatte 13 angeordnete Abschnitt des Stützelements 14, verläuft die Adapterplatte 2 vom Unterstützungspunkt U aus gesehen vom Boden 11 weg gerichtet bzw. schräg zur Adapterplatte 13.

Wird die Schraubenmutter 16 in der Verschiebe- bzw. Anpressrichtung V weiter auf das Stützelement 14 aufgeschraubt, liegt sie zwischen der Anschlagfläche 17 und dem Auflagepunkt P in einem Andrückpunkt A an der Adapterplatte 2 an. Wenn nun die Schraubenmutter 16 noch weiter auf das Stützelement 14 aufgeschraubt wird, wird hierdurch eine auf den Boden 11 gerichtete Hebekraft in den Andrückpunkt A eingeleitet. Durch die schräg zur Trägerplatte 13 verlaufende Anordnung der Adapterplatte 12 und dadurch, dass das Rollenelement 1 nur im Unterstützungspunkt U an der Trägerplatte 13 aufliegt, wird die Hebekraft in eine der Gewichtskraft des Lagersystems entgegenwirkende Hebelkraft gewandelt, die über einen Kraftarm K der Adapterplatte 2 wirkt. Der Kraftarm K ist durch einen zwischen dem Andrückpunkt A und dem Unterstützungspunkt U verlaufenden Abschnitt der Adapterplatte 2 ausgebildet.

Zur Komplettierung der hebelartigen Ausgestaltung des Rollenelements 1 ist der zwischen dem Unterstützungspunkt U und dem Auflagepunkt P verlaufende Abschnitt der Adapterplatte 2 als ein Lastarm L ausgebildet. Der Kraftarm K und der Lastarm L überlappen sich dabei wenigstens abschnittsweise.

Durch ein weiteres Verschieben der Schraubenmutter 16 in Richtung auf den Boden 11 bzw. in Richtung auf die Trägerplatte 13 schwenkt das Rollenelement 1 um den Auflagepunkt P in einer der Anpressrichtung V entgegengesetzten und vom Boden 11 weg weisenden Schwenkrichtung S. Der Fuß 10 wird in einer vom Boden 11 weg weisenden Heberichtung H vom Boden 11 abgehoben.

Die Trägerplatte 13 dient insbesondere im Bereich des Unterstützungspunktes U als Wideroder Auflager W für die Adapterplatte 2, wobei eine Schwenkhebelachse c der schwenkhebelartig ausgestalteten Adapterplatte 2 parallel zum Widerlager W verläuft. Relativ zur Trägerplatte 13 wird das Rollenelement 1 beim Anheben des Fußes 10 um die Schwenkhebelachse c geschwenkt.

Um zu verhindern, dass sich das Rollenelement 1 beim Anheben des Fußes 10 oder bei einem Verschiebevorgang des Lagersystems relativ zur Trägerplatte 13 horizontal verdreht, ist an der Trägerplatte 13 eine optionale Führungswand f befestigt, gegen die die Adapterplatte 2 bei Bewegungen um das Stützelement 14 herum stößt.

Der Nachrüstsatz kann neben dem Rollenelement 1 auch ein an der Trägerplatte 13 befestigbares Verstellorgan O, beispielsweise eine Gewindestange oder das Stützelement 14, das länger als ein standardmäßig vorgesehenes Stützelement ausgebildet sein kann, und die Schraubenmutter 16 umfassen.

Figur 3 zeigt das Ausführungsbeispiel der Figur 2 in der Seitenansicht der Figur 2, jedoch ungeschnitten und in einer Transportstellung T, in der das Abstellende 15 vom Boden 11 abgehoben ist.

Die Adapterplatte 2 ist in der Transportstellung T weiter in Richtung auf die Trägerplatte 13 geschwenkt. Die weg vom Befestigungsende 7 weg gerichtete Ausdehnung der schlitzförmigen Befestigungsöffnung 8, die optional auch als Langloch mit gleicher Orientierung ausgebildet sein kann, ermöglicht ein Schwenken des Adapterplatte 2 relativ zum vertikal ausgerichteten Verstellorgan O. Die Schraubenmutter 16 ist so weit auf das Stützelement 14 aufgeschraubt, dass sie die Adapterplatte 2 wiederholt lösbar mit der Trägerplatte 13 verpresst, wobei die Adapterplatte 2 an der Trägerplatte 13 anliegt. Eine Abstellfläche 18 des Abstellendes 15 ist vom Boden 11 abgehoben. Die Gewichtskraft des Lagersystems wird von der Trägerplatte 13 an die Adapterplatte 2 und von dort über die Transportrolle 3 in den Boden 11 eingeleitet. Die Schraubenmutter 16 sichert als Kontermutter ein ungewolltes Verdrehen des Stützelements 14.

In dieser Ansicht ist gut zu erkennen, dass das Stützelement 14 zwischen dem Abstellende 15 und einem Gewindeabschnitt 19 mit einem Betätigungsabschnitt 20 ausgeformt ist. Ist die Kontermutter 16 gelöst, kann das Stützelement 14 unter Zuhilfenahme eines am Betätigungsabschnitt 20 angesetzten Werkzeugs, beispielsweise eines Maulschlüssels, verdreht werden, wodurch die Aufstellhöhe des Lagersystems änderbar ist. Das Stützelement 14 bildet also zusammen mit der Trägerplatte 13 eine Höhenverstelleinrichtung für den Fuß 10 aus.

Im hier gezeigten Ausführungsbeispiel liegt die Adapterplatte 2 auf einer vom Boden 11 weg weisenden Oberseite der Trägerplatte 13 auf. Alternativ kann die Adapterplatte 2 auch gegen die zum Boden 11 weisende Unterseite der Trägerplatte 13 gedrückt sein, wobei die Schraubenmutter 16 dann zwischen dem Abstellende 15 und der Adapterplatte 2 anzuordnen wäre. Auch kann zwischen der Adapterplatte 2 und der Trägerplatte 13 wenigstens ein Abstandselement, beispielsweise einer auf das Stützelement 14 aufgeschraubte weitere Schraubenmutter vorgesehen sein.

## Patentansprüche

1. Fuß (10) für ein automatisches Lagerliftsystem, wie einen Paternoster oder einen Lagerlift, wobei der Fuß (10) ein Rollenelement (1) mit einer Befestigungsöffnung (8), einem Verstellorgan (O), einem Andrückelement (E) und einer Adapterplatte (2), mit der eine Transportrolle (3) unverlierbar verbunden ist, aufweist, und der Fuß (10) von einer Betriebsstellung (B), in der er auf einem Boden (11) aufsteht, in eine Transportstellung (T), in der er vom Boden (11) abgehoben und die Transportrolle (3) auf dem Boden (11) aufgelegt ist, überführbar ist, wobei der Fuß (10) ein horizontal ausgerichteten Widerlager (W) für die Adapterplatte (2) aufweist, die Adapterplatte (2) des mit der Transportrolle (3) auf dem Boden (11) aufliegenden Rollenelements (1) zusammen mit dem Verstellorgan (O) und dem Andrückelement (E) eine Hebelvorrichtung zum Abheben des Fußes (10) für das Lagersystem ausbildet, und das Verstellorgan (O) durch die Befestigungsöffnung (8) ragend am Widerlager (W) fixiert und die Adapterplatte (2) zumindest im Bereich der Befestigungsöffnung (8) zwischen dem Widerlager und dem Andrückelement (E) angeordnet ist, **dadurch gekennzeichnet, dass** die Adapterplatte (2) in der Betriebsstellung (B) schräg zum Widerlager (W) verläuft und in der Transportstellung (T) im Vergleich zur Betriebsstellung (B) in Richtung auf das Widerlager (W) geschwenkt ist.

2. Fuß (10) nach Anspruch 1, **dadurch gekennzeichnet, dass** die Adapterplatte (2) zumindest in der Betriebsstellung (B) um eine parallel zum Widerlager (W) verlaufende Schwenkachse (c) schwenkbar am Widerlager (W) anliegt.

3. Fuß (10) nach Anspruch 1 oder 2, **dadurch gekennzeichnet, dass** die Adapterplatte (2) an ihrem der Transportrolle (3) gegenüberliegenden Befestigungsende (7) eine senkrecht zur Adapterplatte (2) verlaufende, durchgängige Befestigungsöffnung (8) zur Anbringung der Adapterplatte (2) am Fuß (10) aufweist, dass das Verstellorgan (O) am Lagersystem fixierbar und in der Befestigungsöffnung (8) aufnehmbar ist und dass das Andrückelement (E) entlang des Verstellorgans (O) beweglich und gegen die Adapterplatte (2) in Anschlag bringbar am Verstellorgan (O) montierbar ist.

4. Fuß (10) nach Anspruch 3, **dadurch gekennzeichnet, dass** die Befestigungsöffnung (8) schlitzförmig und zum Befestigungsende (7) offen ausgeformt ist.

5. Fuß (10) nach Anspruch 3 oder 4, **dadurch gekennzeichnet, dass** das Verstellorgan (O) einen Gewindeabschnitt (19) umfasst und das Andrückelement (E) als eine Schraubenmutter (16) ausgeformt ist.

6. Fuß (10) nach einem der Ansprüche 3 bis 5, **dadurch gekennzeichnet, dass** das Verstellorgan (O) eine Abstellfläche (18) des Fußes (10) für das Lagersystem ausbildet.

7. Fuß (10) nach einem der Ansprüche 3 bis 6, **dadurch gekennzeichnet, dass** die Transportrolle (3) um eine Drehachse (d) drehbar und um eine senkrecht zur Drehachse (d) verlaufende Lenkachse (r) schwenkbar mit der Adapterplatte (2) verbunden ist.

8. Fuß (10) nach Anspruch 7, **dadurch gekennzeichnet, dass** die Drehachse (d) die Lenkachse (r) schneidet.

9. Fuß (10) nach einem der Ansprüche 3 bis 8, **dadurch gekennzeichnet, dass** eine Schwenklage der Adapterplatte (2) durch ein Verschieben des Andrückelements (E) auf dem Verstellorgan (O) änderbar ist.

10. Fuß (10) nach einem der Ansprüche 3 bis 9, **dadurch gekennzeichnet, dass** das Verstellorgan (O) mit dem Widerlager (W) eine Höhenverstelleinrichtung des Fußes (10) ausbildet.

11. Fuß (10) nach einem der Ansprüche 3 bis 10, **dadurch gekennzeichnet, dass** das Widerlager (W) als eine sich im Wesentlichen horizontal erstreckende Trägerplatte (13) des Fußes (10) das Verstellorgan (O) als ein durch die Trägerplatte 13 geschraubtes Stützelement (14), das die Abstellfläche (17) des Fußes (10) umfasst, und das Andrückelement (E) als eine auf das Stützelement (14) aufgeschraubte Kontermutter (16) ausgestaltet sind.

12. Verfahren zum Verschieben eines automatischen Lagersystems wie einen Paternoster oder einen Lagerlift, bei dem wenigstens ein Fuß (10) nach Anspruch 1 des Lagersystems durch ein Schwenken einer Adapterplatte (2) eines Rollenelements (1) von einer Betriebsstellung (B), in der er auf einem Boden (11) aufsteht, in eine Transportstellung (T), in der er vom Boden (11) abgehoben und eine Transportrolle (3) auf dem Boden (11) aufgelegt ist, überführt wird, **dadurch gekennzeichnet, dass** eine Schwenkhebelkraft zum Anheben des Fußes (10) in diesen eingeleitet wird.

## Claims

1. A foot (10) for an automatic storage lift system, such as a paternoster or a storage lift, the foot (10) having a roller element (1) with a fastening opening (8), an adjusting member (O), a press-on element (E) and an adapter plate (2), to which a transport roller (3) is captively connected, wherein the foot (10) is transferable from an operative position (B), in which it stands on a floor (11), into a transport position (T), in which it is lifted from the floor (11) and the transport roller (3) bears on the floor (11), wherein the foot (10) comprises an abutment (W) for the adapter plate, said abutment (W) extending in horizontal direction, wherein the adapter plate (2) of the roller element (1) which bears on the floor (11) with its transport roller (3) forms together with the adjusting member (O) and the press-on element (E) a lever device for lifting the foot (10) for the storage lift system, and wherein the adjusting member (O) is fixed to the abutment (W) while projecting through the fastening opening (8), and the adapter plate (2) is arranged at least in the area of the fastening opening (8) between the abutment (W) and the press-on element (E), **characterized in that** in the operative position (B) the adapter plate (2) extends inclined relative to the abutment (W) and in the transport position (T), in comparison with the operative position (B), it is pivoted towards the abutment (W).

2. The foot (10) according to claim 1, **characterized in that** at least in the operative position (B) the adapter plate (2) rests on the abutment (W) to be pivotable about a pivot axis (c) extending in parallel with the abutment (W).

3. The foot (10) according to claim 1 or 2, **characterized in that** the adapter plate (2) at its fastening end (7) opposite to the transport roller (3) comprises a continuous fastening opening (8) extending perpendicular to the adapter plate (2) for mounting the adapter plate (2) on the foot (10), that the adjusting member (O) is fixable to the storage system and receivable in the fastening opening (8) and that the press-on element (E) is movable along the adjusting member (O) and mountable on the adjusting member (O) to be brought into abutment on the adapter plate (2).

4. The foot (10) according to claim 3, **characterized in that** the fastening opening (8) is shaped in the form of a slit and open towards the fastening end (7).

5. The foot (10) according to claim 3 or 4, **characterized in that** the adjusting member (O) comprises a threaded section (19), and the press-on element (E) is formed as a screwnut (16).

6. The foot (10) according to one of the claims 3 to 5, **characterized in that** the adjusting member (O) forms a placement area (18) of the foot (10) for the storage system.

7. The foot (10) according to one of the claims 3 to 6, **characterized in that** the transport roller (3) is connected to the adapter plate (2) to be rotatable about a rotational axis (d) and to be pivotable about a steering axis (r) extending perpendicular to the rotational axis (d).

8. The foot (10) according to claim 7, **characterized in that** the rotational axis (d) intersects the steering axis (r).

9. The foot (10) according to one of the claims 3 to 8, **characterized in that** a pivot position of the adapter plate (2) is changeable by displacing the press-on element (E) on the adjusting member (O).

10. The foot (10) according to one of the claims 3 to 9, **characterized in that** the adjusting member (O) with the abutment (W) forms a height adjusting member for the foot (10).

11. The foot (10) according to one of the claims 3 to 10, **characterized in that** the abutment (W) is configured as a carrier plate (13) of the foot (10) extending substantially in horizontal direction, the adjusting member (O) is configured as a support element (14) which is screwed through the carrier plate (13) and which comprises the placement area (18) of the foot (10) and the press-on element (E) is configured as a counter-nut (16) screwed onto the support element (14).

12. A method for displacing an automatic storage system, such as a paternoster or storage lift, in which at least one foot (10) according to claim 1 of the storage system is transferred from an operative position (B), in which it stands on a floor (11), into a transport position (T), in which it is lifted from the floor (11) and a transport roller (3) is placed on the floor by pivoting an adapter plate (2) of a roller element (1), **characterized in that** a force for lifting the foot is introduced into said foot.

## Revendications

1. Pied (10) pour un système de magasin de stockage automatique, comme un système du type pater noster ou un magasin de stockage à navette,
le pied (10) présentant un élément à roulette (1) avec une ouverture de fixation (8), un organe de réglage (O), un élément presseur (E) et une plaque d'adaptation (2) avec laquelle est reliée de manière imperdable une roulette de transport (3), et le pied (10) pouvant être transféré d'une position de service (B), dans laquelle il repose sur un sol (11), à une position de transport (T) dans laquelle il est soulevé du sol (11) et dans laquelle la roulette de transport (3) s'appuie sur le sol (11),
et le pied (10) présentant un appui de butée (W) orienté horizontalement pour la plaque d'adaptation (2), la plaque d'adaptation (2) de l'élément à roulette (1), qui repose sur le sol (11) avec la roulette de transport (3), formant, en commun avec l'organe de réglage (O) et l'élément presseur (E), un dispositif à levier destiné à soulever le pied (10) pour le système de magasin de stockage, et l'organe de réglage (O) étant fixé à l'appui de butée (W) en traversant l'ouverture de fixation (8), et la plaque d'adaptation (2) étant agencée, au moins dans la zone de l'ouverture de fixation (8), entre l'appui de butée et l'élément presseur (E),
**caractérisé en ce que** dans la position de service (B), la plaque d'adaptation (2) s'étend de manière inclinée par rapport à l'appui de butée (W), et, dans la position de transport (T), elle est pivotée en direction de l'appui de butée (W), par rapport à la position de service (B).

2. Pied (10) selon la revendication 1, **caractérisé en ce que** la plaque d'adaptation (2) s'appuie, au moins dans la position de service (B), contre l'appui de butée (W), de manière à être pivotante autour d'un axe de pivotement (c) s'étendant parallèlement à l'appui de butée (W).

3. Pied (10) selon la revendication 1 ou la revendication 2, **caractérisé en ce que** la plaque d'adaptation (2) présente, à son extrémité de fixation (7) opposée à celle où se trouve la roulette de transport (3), une ouverture de fixation (8) traversant la plaque d'adaptation (2) et s'étendant perpendiculairement à celle-ci, pour rapporter la plaque d'adaptation (2) sur le pied (10), **en ce que** l'organe de réglage (O) peut être fixé au système de magasin de stockage et être reçu dans l'ouverture de fixation (8), et **en ce que** l'élément presseur (E) peut être monté sur l'organe de réglage (O) de manière déplaçable le long de l'organe de réglage (O) et en pouvant être amené en butée contre la plaque d'adaptation (2).

4. Pied (10) selon la revendication 3, **caractérisé en ce que** l'ouverture de fixation (8) est réalisée en forme de fente et est ouverte vers l'extrémité de fixation (7).

5. Pied (10) selon la revendication 3 ou la revendication 4, **caractérisé en ce que** l'organe de réglage (O) comprend un secteur fileté (19) et l'élément presseur (E) est réalisé sous la forme d'un écrou de vis (16).

6. Pied (10) selon l'une des revendications 3 à 5, **caractérisé en ce que** l'organe de réglage (O) forme une surface d'appui au sol (18) du pied (10) pour le système de magasin de stockage.

7. Pied (10) selon l'une des revendications 3 à 6, **caractérisé en ce que** la roulette de transport (3) peut tourner autour d'un axe de rotation (d), et est reliée à la plaque d'adaptation (2) de manière à pouvoir pivoter autour d'un axe de direction (r) s'étendant perpendiculairement à l'axe de rotation (d).

8. Pied (10) selon la revendication 7, **caractérisé en ce que** l'axe de rotation (d) coupe l'axe de direction (r) .

9. Pied (10) selon l'une des revendications 3 à 8, **caractérisé en ce qu'**une position de pivotement de la plaque d'adaptation (2) peut être modifiée par un déplacement de l'élément presseur (E) sur l'organe de réglage (O).

10. Pied (10) selon l'une des revendications 3 à 9, **caractérisé en ce que** l'organe de réglage (O) forme avec l'appui de butée (W), un système de réglage en hauteur du pied (10).

11. Pied (10) selon l'une des revendications 3 à 10, **caractérisé en ce que** l'appui de butée (W) est réalisé en tant que plaque de support (13) du pied (10), qui s'étend sensiblement de manière horizontale, l'organe de réglage (O) est réalisé en tant qu'élément d'appui (14), qui est vissé à travers la plaque de support (13) et comporte la surface d'appui au sol (18) du pied (10), et l'élément presseur (E) est réalisé en tant que contre-écrou (16) vissé sur l'élément d'appui (14) .

12. Procédé pour déplacer un système de magasin de stockage automatique, tel qu'un système du type pater noster ou un magasin de stockage à navette, d'après lequel au moins un pied (10) selon la revendication 1, du système de magasin de stockage, est transféré par un pivotement d'une plaque d'adaptation (2) d'un élément à roulette (1), d'une position de service (B), dans laquelle il repose sur un sol (11), à une position de transport (T) dans laquelle il est soulevé du sol (11) et dans laquelle une roulette de transport (3) est appliquée sur le sol (11), **caractérisé en ce qu'**une force de levier de pivotement pour soulever le pied (10) est appliquée à celui-ci.
